# EUROPÄISCHE PATENTSCHRIFT

(11) **EP 0 783 850 B1**
(45) Veröffentlichungstag und Bekanntmachung des Hinweises auf die Patenterteilung: **28.03.2001**
(21) Anmeldenummer: 96117950.4
(22) Anmeldetag: 08.11.1996
(51) Int. Cl.: A46B 7/04

(54) **Zahnbürste mit einem auswechselbaren Borstenfeld**
Toothbrush with replaceable bristle carrier
Brosse à dents avec porte-soies remplaçable

(30) Priorität: 11.01.1996 DE 19600767
(43) Veröffentlichungstag der Anmeldung: 16.07.1997
(73) Patentinhaber: F.A. Rueb Holding GmbH, 79677 Schönau (DE)
(72) Erfinder: Rueb, Fritz Alfons, 79677 Schönau (DE)
(74) Vertreter: Schmitt, Hans, Dipl.-Ing.

(56) Entgegenhaltungen:
- DE-A- 3 038 895
- DE-A- 3 724 640
- DE-U- 9 109 625

## Beschreibung

Die Erfindung betrifft eine Zahnbürste mit einem Stiel und mit einem auswechselbaren Borstenfeld, dessen Borsten an einer mit dem Stiel lösbar verbundenen Borstenplatte etwa rechtwinklig abstehen, welche Borstenplatte in eine einen Boden und einen diesem gegenüber hochstehenden Rand aufweisende Aussparung des Stieles oder einer Verbreiterung des Stieles paßt und einen in eine durchgehenden Lochung des Bodens eingreifenden Ausdrückvorsprung aufweist, wobei der hochstehende Rand der Aussparung in Gebrauchsstellung an der Schmalseite der Borstenplatte derart anliegt und am gesamten Umfang umläuft, daß ein Aufnahmebereich für die Borstenplatte und für den Ausdrückvorsprung gebildet ist.

Eine derartige Zahnbürste ist aus dem DE 91 09 625 U1 bekannt. Dabei kann es sich sowohl um eine Zahnbürste handeln, die von Hand betätigt wird, bei der also der Stiel ein Handgriff ist, als auch um eine Zahnbürste, die mit ihrem Stiel an einer Antriebsvorrichtung ankuppelbar ist.

Diese bekannte Zahnbürste hat sich bewährt und hat den Vorteil, daß nach einer gewissen Benutzungsdauer und Abnutzung der Borsten nicht die ganze Zahnbürste, sondern nur das Borstenfeld ausgewechselt werden muß.

Dabei besteht jedoch die Gefahr, daß während der Benutzung Zahnpastaschlamm und Verunreinigungen, insbesondere auch Bakterien, unter die Borstenplatte in deren Aufnahmebereich gelangen könnten. Dies wäre sehr unhygienisch, weil bei der weiteren Benutzung dann Bakterien und Mikroorganismen in dieser Aufnahme der Zahnbürste zunehmen können. Im Extremfall könnte sogar im Hinblick auch auf die Feuchtigkeit, der die Zahnbürste ständig ausgesetzt wird, Schimmel auftreten. Dies bedeutet, daß der Benutzer beim Auswechseln der Borstenplatte eine gründliche Reinigung des Stieles und insbesondere des Aufnahmebereiches durchführenmüßte, was aber häufig unterbleibt.

Es besteht deshalb die Aufgabe, eine Zahnbürste der eingangs genannten Art zu schaffen, bei der das Eindringen von Verunreinigungen unter die Borstenplatte in deren Aufnahmebereich weitestgehend vermieden werden kann.

Die Lösung dieser Aufgabe besteht im wesentlichen darin, daß an dem Aufnahmebereich und/oder an der Borstenplatte an den gegenseitigen Berührflächen oder Berührlinien eine gegenüber dem Werkstoff des Stieles und/oder der Borstenplatte andere Materialkomponente eingefügt, eingearbeitet oder im Zweikomponentenspritzgießverfahren eingespritzt ist, die weicher als der Werkstoff des hochstehenden Randes der Aussparung und/oder der Borstenplatte und ihres Ausdrückvorsprunges ist und so ausgebildet ist, daß dadurch in Gebrauchsstellung eine Abdichtung zwischen Borstenplatte und Aussparung des Stiels erreicht wird.

Dadurch ergibt sich beim Einsetzen der Borstenplatte nicht nur eine gute Halterung aufgrund des weicheren Materials, sondern vor allem wird dadurch eine gute Abdichtung gebildet, so daß vermieden wird, daß Zahnpastaschlamm und sonstige Verunreinigungen in den Aufnahmebereich unter der Borstenplatte gelangen, selbst wenn der Benutzer durch heftige Bewegungen eine gewisse Verformung im Aufnahmebereich bewirkt.

Besonders zweckmäßig ist es für die gute Abdichtung mit gleichzeitig entsprechend guter Halterung, wenn der aus weicherem Werkstoff bestehende Teil des Aufnahmebereiches oder der Aussparung in Gebrauchsstellung durch die Borstenplatte und/oder ihren Ausdrückvorsprung elastisch verformt ist und/oder an der Borstenplatte befindlicher weicherer Werkstoff durch den hochstehenden Rand der Aussparung zusammengedrückt ist. Bevorzugt befindet sich aus herstellungstechnischen Gründen der weichere Werkstoff dabei an dem Aufnahmebereich und kann diesen und die Unterseite der Borstenplatte nach deren Einsetzen in die Aussparung wirkungsvoll abdichten. Gleichzeitig ergibt sich eine gute Halterung, die aber das Auswechseln gegenüber einer bisherigen Lösung mit einer verrasteten Borstenplatte kaum oder nicht erschwert.

Eine Verbesserung der Abdichtung der Unterseite des Borstenfeldes beziehungsweise der Borstenplatte ergibt sich, wenn die eingespritzte weichere Materialkomponente als Abdichtung an dem als Wandung hochstehenden umlaufenden Rand und/oder am Boden der Aussparung angeordnet ist und insbesondere am gesamten Umfang der Aussparung ununterbrochen umläuft. Dies führt zu einer geschlossenen Abdichtung am gesamten Umfang der Aussparung und somit des Aufnahmebereiches für die Borstenplatte. Dabei kann die als Abdichtung dienende weichere Materialkomponente als dichtender Streifen ausgebildet sein, der insbesondere mit der Stirnseite der sie aufnehmenden Wandung und/oder mit der Seite der Borstenplatte, auf der die Borsten hochstehen, bündig ist oder übersteht. Dadurch wird erreicht, daß die Abdichtung gleich an der Einschubstelle der auswechselbaren Borstenplatte erreicht wird.

Zweckmäßigerweise kann der an dem hochstehenden Rand innenseitig angeordnete dichtende Streifen aus der weicheren Materialkomponente eine nach innen zu der Mitte der Aussparung hin vorstehende Dichtlippe aufweisen, die den Rand der Borstenplatte in Gebrauchsstellung dichtend übergreift. Dadurch wird die Abdichtung zwischen dem hochstehenden Rand und dieser Borstenplatte weiter verbessert.

Um das Eindrücken der Borstenplatte in ihre Gebrauchsstellung zu erleichtern, kann der mit der Stirnseite des hochstehenden Randes insbesondere bündige dichtende Streifen eine zum Inneren der Aussparung von außen nach innen abfallende Abschrägung, Abrundung oder dergleichen Einführhilfe aufweisen, die sich insbesondere bis zu dem innen umlaufenden Rand der Dichtlippe - sofern eine solche vorhanden ist - erstrecken kann. Dadurch kann auch in dem Fall, in welchem die weichere Materialkomponente die Innenseite der Stirnseite des hochstehenden Randes bildet, die Borstenplatte dennoch gut in ihre Gebrauchslage eingeführt und dann eingedrückt werden.

Zwar bildet die Lochung zur Aufnahme des Ausdrückvorsprunges nur eine im Vergleich zudem umlaufenden Rand verhältnismäßig kleine Zutrittsöffnung, die zu dem in Gebrauchsstellung von dem Ausdrückvorsprung in der Regel im Klemmsitz ausgefüllt ist, jedoch kann auch hier die Abdichtung des Aufnahmebereiches dadurch verbessert sein, daß zumindest in einem Teilbereich der den Ausdrückvorsprung in Gebrauchsstellung aufnehmenden Lochung durch den Boden der Aussparung ein Ring aus weicherem Material angeordnet ist. Somit wird der Ausdrückvorsprung in Gebrauchsstellung innerhalbder ihnauf nehmenden Lochung praktisch von einem Dichtring umschlossen. Dies ermöglicht unter Umständen auch eine Fertigung des Ausdrückvorsprunges mit großzügigeren Toleranzen, ohne daß an dieser Stelle ein Eindringen von Verunreinigungen befürchtet werden muß.

Besonders günstig ist es dabei, wenn die Lochung für den Ausdrückvorsprung oder Auswerferstift über den größeren Teil ihrer axialen Erstreckung oder die gesamte axiale Erstreckung mit der weicheren Materialkomponente als Dichtung ausgekleidet oder ausgespritzt ist. Selbst Relativbewegungen zwischen dem Ausdrückvorsprung und der Lochung aufgrund von Verformungen bei der Benutzung der Zahnbürste führen in einem solchen Falle auch nicht zu kurzzeitigen Undichtigkeiten an dieser Stelle.

Dabei ist es vorteilhaft, wenn die weichere Materialkomponente im Bereich der Lochung für den Ausdrückvorsprung an wenigstens einem Rand dieser Lochung, insbesondere an beiden Rändern dieser Lochung eine gegenüber ihrem mittleren Bereich größere radiale Dicke hat derart, daß eine Dichtungshülse in die Lochung eingespritzt ist, die auch in axialer Richtung formschlüssig mit dem härteren Werkstoff angeordnet ist. Dadurch kann auch bei einem mehrmaligen Auswechseln der Borstenplatte ein eventuelles Herausdrücken des weicheren Werkstoffes aus der Lochung selbst dann vermieden werden, wenn der Ausdrückvorsprung in dieser Lochung einen strammen Sitz hat.

Die weichere Materialkomponente kann ein Kunststoff sein, der mit dem Kunststoff des Stieles oder Handgriffes und/oder dem Kunststoff der Borstenplatte chemisch soweit übereinstimmt, daß beim Einspritzen der weicheren Materialkomponente in den härteren Kunststoff eine feste Verbindung der beiden Werkstoffe entsteht. Dies führt zu einer langen Lebensdauer des Stieles und seines Aufnahmebereiches, so daß zahlreiche Wechsel der Borstenplatte erfolgen können, ohne daß dies zu Undichtigkeiten führt. Aufgrund der chemischen Verwandtschaft ergibt sich vielmehr eine innige Verbindung der beiden Werkstoffkomponenten.

Ausgestaltungen und Weiterbildungen der Erfindung insbesondere hinsichtlich der Ausbildung und Anordnung der weicheren Materialkomponente sind Gegenstand der Ansprüche 11 bis 13.

Anspruch 11 beschreibt dabei eine Möglichkeit, die Unterseite der die Borsten aufweisenden auswechselbaren Borstenplatten noch besser vor dem Zutritt von Verunreinigungen zu schützen, indem zwei Leisten oder Streifen aus der weicheren Werkstoff- oder Materialkomponente vorgesehen werden.

Anspruch 12 gibt eine Ausgestaltung der Borstenplatte an, die ein besonders gutes Zusammenwirken mit einer zweiten, weiter innen verlaufenden Abdichtung ermöglicht.

Anspruch 13 enthält zweckmäßige Maßnahmen, die zwei gegenüber der Borstenplatte umlaufende Dichtungsstreifen und gleichzeitig die Berücksichtigung der Lochung für den Ausdrückvorsprung erlauben. Die Anbringung eines oder mehrerer umlaufender Dichtungsstreifen ermöglicht dabei noch eine Ausgestaltung gemäß Anspruch 14 dahingehend, daß die Borstenplatte an ihrem umlaufenden Rand einen vorspringenden Bereich aufweisen kann, der in Gebrauchsstellung in die weichere Materialkomponente des dichtenden Streifens eingedrückt oder mit einem Absatz an der Innenseite des hochstehenden Randes verrastet ist. Dies verbessert die Abdichtung und die Halterung der auswechselbaren Borstenplatte in ihrer Gebrauchsstellung.

Insbesondere bei Kombination einzelner oder mehrerer der vorbeschriebenen Merkmale und Maßnahmen ergibt sich eine Zahnbürste, deren Borstenfeld in bewährter Weise ausgewechselt werden kann, wobei sich die Erfindung zunutze macht, daß das Zweikomponentenspritzgußverfahren hochentwickelt ist und somit die Anordnung von Abdichtungen im Aufnahmebereich der Borstenplatte ermöglicht, durch die Verunreinigungen in diesem Bereich praktisch ausgeschlossen werden können.

Nachstehend ist ein Ausführungsbeispiel der Erfindung anhand der Zeichnung näher beschrieben.

Es zeigt in zum Teil schematisierter Darstellung:
- Fig. 1: einen Längsschnitt einer erfindungsgemäßen Zahnbürste, deren Stiel der besseren Übersicht wegen abgebrochen dargestellt ist und entweder ein Handgriff oder ein Verbindungsstück zu einem elektrischen Antrieb sein kann, wobei am Ende des Stieles eine Aussparung als Aufnahmebereich für eine Borstenplatte angeordnet ist, die sich in Figur 1 in Gebrauchsstellung befindet,
- Fig. 2: eine Draufsicht des Aufnahmebereiches für die Borstenplatte ohne diese Borstenplatte, wobei man im Aufnahmebereich Streifen aus weicherem Werkstoff erkennt, die in Gebrauchsstellung die Ränder und den Ausdrückvorsprung der Borstenplatte abdichten,
- Fig. 3: eine der Fig. 1 entsprechende Darstellung eines abgewandelten Ausführungsbeispieles, wobei die Borstenplatte der Einfachheit halber ohne Borsten dargestellt ist und die einen dichtenden Streifen bildende weichere Materialkomponente mit der Stirnseite des hochstehenden Randes bündig ist, sowie
- Fig. 4: in vergrößertem Maßstab einen Schnitt durch die Abdichtung der ohne Borsten dargestellten Borstenplatte innerhalb der Aussparung mittels zweier dichtender Streifen.

Eine im ganzen mit 1 bezeichnete Zahnbürste hat in bekannter Weise einen Stiel 2, der in der Regel als Handgriff benutzt wird. Ferner weist diese Zahnbürste 1 ein auswechselbares Borstenfeld 3 auf, dessen Borsten 4 in Form von Borstenbündeln an einer mit dem Stiel 2 lösbar verbundenen Borstenplatte 5 etwa rechtwinklig abstehen, so daß sie auch gegenüber dem Verlauf des Stieles 2 rechtwinklig hochstehen.

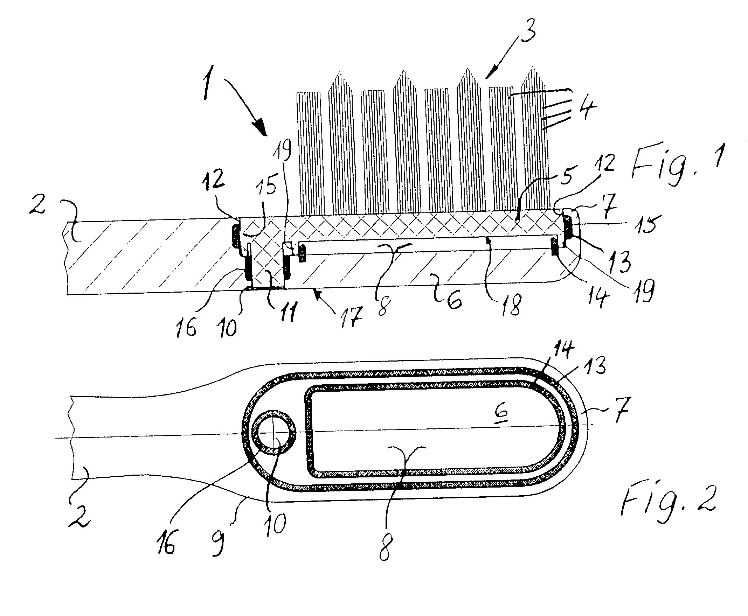

Die Borstenplatte 5 paßt gemäß Figur 1 in eine einen Boden 6 und einen diesem gegenüber hochstehenden Rand 7 aufweisende Aussparung 8 des vordersten Ende des Stieles 2 beziehungsweise einer Verbreiterung 9 dieses Stieles 2. Dabei ist ferner an dem dem Stiel 2 zugewandten Ende dieser Aussparung 8 eine durchgehende Lochung 10 in dem Boden 6 dieser Aussparung 8 angeordnet, in die ein Ausdrückvorsprung 11 formschlüssig eingreift, der mit der Borstenplatte 5 einstückig verbunden ist. In Figur 1 erkennt man, daß der hochstehende Rand 7 der Aussparung 8 in Gebrauchsstellung an der Schmalseite 12 der Borstenplatte 5 derart anliegt und an dem gesamten Umfang umläuft, daß ein Aufnahmebereich für die Borstenplatte 5 und für den Ausdrückvorsprung 11 gebildet ist.

Zum Auswechseln der Borstenplatte 5 beziehungsweise des Borstenfeldes 3 kann von der Unterseite des Bodens 6 aus gegen die Stirnseite des Ausdrückvorsprunges 11 gedrückt werden, wodurch die Borstenplatte 5 gegen einen gewissen Haltewiderstand hochgeschwenkt wird, um dann endgültig entnommen werden zu können. Danach kann eine neue Borstenplatte 5 in den Aufnahmebereich eingelegt und eingedrückt werden.

Vor allem in Figur 1 aber auch in Figur 2 erkennt man, daß an dem Aufnahmebereich an den gegenseitigen Berührflächen oder Berührlinien mit der Borstenplatte 5 und dem Ausdrückvorsprung 11 eine gegenüber dem Werkstoff des Stieles 2 und des Bodens 6 sowie des Randes 7 andere Materialkomponente eingefügt und eingearbeitet, zum Beispiel im Zweikomponentenspritzgießverfahren eingespritzt ist, die weicher als der Werkstoff des hochstehenden Randes 7 der Aussparung 8 und der Borstenplatte 5 sowie ihres Ausdrückvorsprunges 11 ist.

Dabei ist im Ausführungsbeispiel vorgesehen, daß sowohl in den hochstehenden Rand 7 an dessen Innenseite als auch im Bereich des Bodens 6, diesem gegenüber hochstehend umlaufende Leisten oder Streifen 13 und 14 aus der weicheren Materialkomponente in die Aussparung 8 eingespritzt sind. Dadurch bilden sie in Gebrauchsstellung mit der Borstenplatte 5 Abdichtungen, die ein Eindringen von Verunreinigungen unter die Borstenplatte 5 in die Aussparung 8 verhindern.

Dabei ist der aus weicherem Werkstoff bestehende Teil des Aufnahmebereiches, der also durch die erwähnten dichtenden Streifen 13 und 14 gebildet wird, in Gebrauchsstellung durch die Borstenplatte 5 elastisch verformt, so daß sich eine entsprechend gute Abdichtwirkung ergibt, zumal die Borstenplatte 5 an ihrem umlaufenden Rand 12 noch einen vorspringenden Bereich 15 aufweist, der sich in dem Dichtungsstreifen 13 aus der weicheren Materialkomponente eindrückt.

Die eingespritzte weichere Materialkomponente ist also als Abdichtung an dem als Wandung hochstehenden umlaufenden Rand 7 und am Boden 6 der Aussparung 8 hochstehend angeordnet und läuft jeweils ununterbrochen um, wie man es vor allem in Figur 2 erkennt.

Gemäß Figur 1 ist außerdem in einem Teilbereich der den Ausdrückvorsprung 11 in Gebrauchsstellung aufnehmenden Lochung 10 ein Ring 16 aus weicherem Material angeordnet und eingespritzt, wobei die Lochung 10 über den größeren Teil ihrer axialen Ersteckung mit der weicheren Materialkomponente als dichtender Ring 16 ausgekleidet ist. Nur der der Unterseite 17 des Bodens 6 nahe Bereich der Lochung 10 ist nicht mit der weicheren Materialkomponente ausgekleidet, so daß dort der Auswerferstift (Ausdrückvorsprung) 11 unmittelbar Berührkontakt mit dem harten Werkstoff des Stieles 2 und seines Aufnahmebereiches hat.

Die weichere Materialkomponente ist zweckmäßigerweise ein Kunststoff, der mit dem Kunststoff des Stieles 2 und des Randes 7 chemisch verwandt ist, so daß beim Einspritzen der weicheren Materialkomponente in den härteren Kunststoff eine feste Verbindung der beiden Werkstoffe entsteht. Dadurch wird erreicht, daß beim Auswechseln der Borstenplatte 5 die abdichtenden Streifen 13 und 14 und der Ring 16 nicht aus ihrer Position herausgedrückt werden können.

In Figur 1 erkennt man noch, daß die den Borsten 4 abgewandte Unterseite 18 der Borstenplatte 5 ihrerseits eine Aussparung und einen demgegenüber umlaufenden Rand 19 hat, der den am Boden 6 der Aussparung 8 des Aufnahmebereiches für die Borstenplatte 5 umlaufenden und diesem gegenüber hochstehenden Streifen 14 aus der weicheren Materialkomponente dichtend übergreift und insbesondere elastisch verformt. Somit wird die Unterseite 18 der Borstenplatte 5 und der zwischen dieser und dem Boden 6 der Aussparung 8 freibleibende Zwischenraum praktisch zweifach abgedichtet, so daß ein Zutritt von Verunreinigungen in diesen Zwischenraum praktisch ausgeschlossen ist.

In Figur 2 wird deutlich, daß die beiden aus der weicheren Materialkomponente bestehenden dichtenden Streifen 13 und 14 mit etwa gleichbleibendem Abstand, dabei allerdings gemäß Figur 1 in der Höhe gegeneinander versetzt, an der Aussparung 8 umlaufend und im Bereich der Lochung 10 für den Ausdrückvorsprung 11 einen größeren Abstand zueinander haben und in diesem Bereich des größeren Abstandes die ihrerseits mit der weicheren Materialkomponente ausgekleidete Lochung 10 angeordnet ist, so daß auch dort durch die weichere Materialkomponente ein Zutritt von Verunreinigungen unter die Borstenplatte 5 verhindert wird.

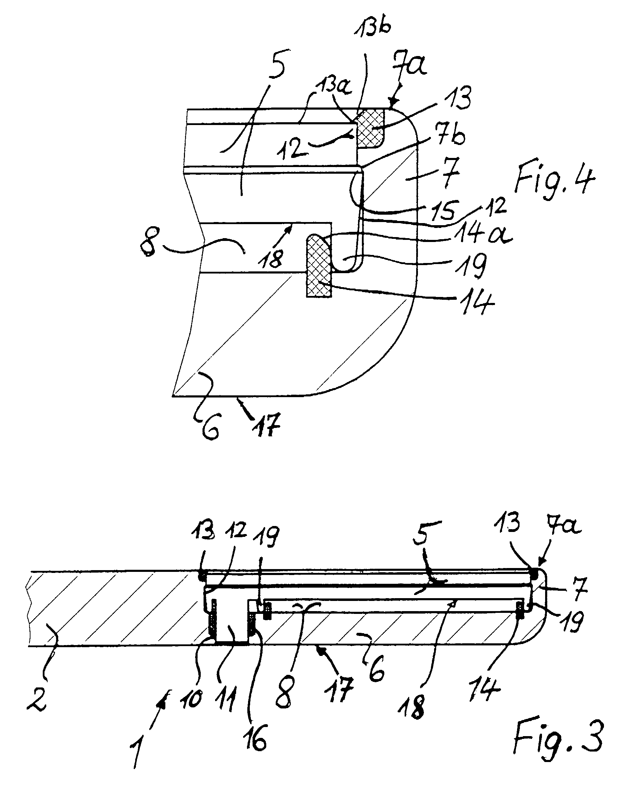

In den Fig. 3 und 4 ist eine hinsichtlich der Abdichtung etwas abgewandelte Ausführungsform gegenüber der vorstehend beschriebenen Anordnung dargestellt. Man erkennt in diesen Fig. 3 und 4 und dabei vor allem in Fig. 4, daß die als Abdichtung dienende weichere Materialkomponente, die als dichtender Streifen 13 ausgebildet ist, mit der Stirnseite 7a der sie aufnehmenden Wandung des hochstehenden Randes 7 ist und dabei gegenüber der Seite der Borstenplatte 5, auf der die Borsten 4 gem. Fig. 1 hochstehen, übersteht. Dabei hat dieser dichtende Streifen 13 aus der weicheren Materialkomponente gem. Fig. 4 eine nach innen zu der Mitte der Aussparung 8 hin vorstehende Dichtlippe 13a, die den Rand 12 der Borstenplatte 5 in Gebrauchsstellung dichtend übergreift. Somit wird die Dichtigkeit an diesem umlaufenden Rand 12 sofort unmittelbar an der Einschubstelle erreicht und die Dichtlippe 13a vergrößert die Dichtfläche.

Dabei erkennt man, daß der mit der Stirnseite 7a des hochstehenden Randes bündige dichtende Streifen 13 eine zum Inneren der Aussparung 8 von außen nach innen abfallende Abschrägung 13b als Einführhilfe aufweist, die sich dabei im Ausführungsbeispiel bis zu dem innen umlaufenden Rand der Dichtlippe 13a erstreckt. Trotz dieser guten randseitigen Abdichtung wird so das Eindrücken der Borstenplatte 5 erleichert und verbessert. Auch an dem dichtenden Streifen 14 erkennt man in Fig. 4 eine in diesem Falle von innen nach außen abfallende Abschrägung 14a, die auch hier das Eindrücken des Randes 19 erleichtert.

Der Bereich 15 am umlaufenden Rand 12 der Borstenplatte 5 ist in diesem Ausführungsbeispiel mit einem Absatz 7b an der Innenseite des hochstehenden Randes 7 verrastet. Dennoch ist das Herauslösen der Borstenplatte 5 aus ihrer Gebrauchsstellung einfach, weil der Ausdrückvorsprung 11 ein genügendes Hochdrücken und Schrägstellen erlaubt, um sowohl aus dieser Verrastung als auch aus dem Dichtungsbereich freigegeben zu werden.

## Patentansprüche

1. Zahnbürste (1) mit einem Stiel (2) und einem auswechselbaren Borstenfeld (3) dessen Borsten (4) an einer mit dem Stiel (2) lösbar verbundenen Borstenplatte (5) etwa rechtwinklig abstehen, welche Borstenplatte (5) in eine einen Boden (6) und einen diesem gegenüber hochstehenden Rand (7) aufweisende Aussparung (8) des Stieles (2) oder einer Verbreiterung (9) des Stieles (2) paßt und einen in eine durchgehende Lochung (10) des Bodens (6) eingreifenden Ausdrückvorsprung (11) aufweist, wobei der hochstehende Rand (7) der Aussparung (8) in Gebrauchsstellung an der Schmalseite (12) der Borstenplatte (5) derart anliegt und am Umfang umläuft, daß ein Aufnahmebereich für die Borstenplatte (5) und den Ausdrückvorsprung (11) gebildet ist, **dadurch gekennzeichnet,** daß an dem Aufnahmebereich und/oder an der Borstenplatte (5) an den gegenseitigen Berührflächen oder Berührlinien eine gegenüber dem Werkstoff des Stieles (2) und/oder der Borstenplatte (5) andere Materialkomponente eingefügt, eingearbeitet oder im Zweikomponentenspritzgießverfahren eingespritzt ist, die weicher als der Werkstoff des hochstehenden Randes (7) der Aussparung (8) und/oder der Borstenplatte (5) und ihres Ausdrückvorsprunges (11) ist und so ausgebildet ist, daß dadurch in Gebrauchsstellung eine Abdichtung zwischen Borstenplatte (5) und Aussparung (8) des Stiels (2) erreicht wird.

2. Zahnbürste nach Anspruch 1, dadurch gekennzeichnet, daß der aus weicherem Werkstoff bestehende Teil des Aufnahmebereiches in Gebrauchsstellung durch die Borstenplatte (5) und/oder ihren Ausdrückvorsprung elastisch verformt ist und/oder an der Borstenplatte (5) befindlicher weicher Werkstoff durch den Rand (7) der Aussparung zusammengedrückt ist.

3. Zahnbürste nach Anspruch 1 oder 2, dadurch gekennzeichnet, daß die eingespritzte weichere Materialkomponente als Abdichtung an den als Wandung hochstehenden umlaufenden Rand (7) und/oder am Boden der Aussparung angeordnet ist und insbesondere am gesamten Umfang der Aussparung ununterbrochen umläuft.

4. Zahnbürste nach einem der Ansprüche 1 bis 3, dadurch gekennzeichnet, daß die als Abdichtung dienende weichere Materialkomponente als dichtender Streifen (13) ausgebildet ist, der insbesondere mit der Stirnseite (7a) der sie aufnehmenden Wandung und/oder mit der Seite der Borstenplatte (5), auf der die Borsten (4) hochstehen, bündig ist oder übersteht.

5. Zahnbürste nach einem der Ansprüche 1 bis 4, dadurch gekennzeichnet, daß der an dem hochstehenden Rand (7) innenseitig angeordnete dichtende Streifen (13) aus der weicheren Materialkomponente eine nach innen zu der Mitte der Aussparung (8) hin vorstehende Dichtlippe (13a) aufweist, die den Rand (12) der Borstenplatte (5) in Gebrauchsstellung dichtend übergreift.

6. Zahnbürste nach einem der Ansprüche 1 bis 5, dadurch gekennzeichnet, daß der mit der Stirnseite (7a) des hochstehenden Randes (7) insbesondere bündige dichtende Streifen (13) eine zum Inneren der Aussparung (8) von außen nach innen abfallende Abschrägung, Abrundung oder dergleichen Einführhilfe aufweist, die sich insbesondere bis zu dem innen umlaufenden Rand der Dichtlippe (13a) erstreckt.

7. Zahnbürste nach einem der Ansprüche 1 bis 6, dadurch gekennzeichnet, daß zumindest in einem Teilbereich der den Ausdrückvorsprung (11) in Gebrauchsstellung aufnehmenden Lochung (10) durch den Boden der Aussparung ein Ring (16) aus weicherem Material angeordnet ist.

8. Zahnbürste nach Anspruch 7, dadurch gekennzeichnet, daß die Lochung (10) für den Ausdrückvorsprung oder Auswerferstift über den größeren Teil ihrer axialen Erstreckung oder die gesamte axiale Erstreckung mit der weicheren Materialkomponente als Dichtung ausgekleidet ist.

9. Zahnbürste nach Anspruch 7 oder 8, dadurch gekennzeichnet, daß die weichere Materialkomponente im Bereich der Lochung (10) für den Ausdrückvorsprung (11) an wenigstens einem Rand dieser Lochung (10), insbesondere an beiden Rändern dieser Lochung eine gegenüber ihrem mittleren Bereich größere radiale Dicke hat, dadurch daß eine Dichtungshülse in die Lochung (10) eingespritzt ist, die auch in axialer Richtung formschlüssig mit dem härteren Werkstoff angeordnet ist.

10. Zahnbürste nach einem der Ansprüche 1 bis 9, dadurch gekennzeichnet, daß die weichere Materialkomponente ein Kunststoff ist, der mit dem Kunststoff des Stieles (2) oder Handgriffes und/oder dem Kunststoff der Borstenplatte chemisch soweit übereinstimmt, daß beim Einspritzen der weicheren Materialkomponente in den härteren Kunststoff eine feste Verbindung der beiden Werkstoffe entsteht.

11. Zahnbürste nach einem der Ansprüche 1 bis 10, dadurch gekennzeichnet, daß sowohl in dem hochstehenden Rand (7) an dessen Innenseite als auch im Bodenbereich, insbesondere diesem gegenüber hochstehend, umlaufende Leisten oder Streifen (13, 14) aus der weicheren Materialkomponente in die Aussparung eingespritzt sind.

12. Zahnbürste nach einem der Ansprüche 1 bis 11, dadurch gekennzeichnet, daß die Unterseite (18) der Borstenplatte (5) ihrerseits eine Aussparung und einen demgegenüber umlaufenden Rand (16) hat, der den am Boden (6) der Aussparung (8) umlaufenden und diesem gegenüber hochstehenden Streifen (14) aus der weicheren Materialkomponente in Gebrauchsstellung dichtend übergreift und insbesondere elastisch verformt.

13. Zahnbürste nach einem der vorstehenden Ansprüche, dadurch gekennzeichnet, daß die beiden aus der weicheren Materialkomponente bestehenden dichtenden Streifen (13, 14) mit etwa gleichbleibendem Abstand, gegebenenfalls in der Höhe gegeneinander versetzt, an der Aussparung (8) umlaufen und im Bereich der Lochung (10) für den Ausdrückvorsprung (11) einen größeren Abstand zueinander haben und in diesem Bereich des größeren Abstandes die ihrerseits mit der weicheren Materialkomponente ausgekleidete Lochung (10) angeordnet ist.

14. Zahnbürste nach einem der vorstehenden Ansprüche, dadurch gekennzeichnet, daß die Borstenplatte (5) an ihrem umlaufenden Rand (12) einen vorspringenden Bereich (15) aufweist, der in Gebrauchsstellung in die weichere Materialkomponente des dichtenden Streifens (13) eingedrückt oder mit einem Absatz (7b) an der Innenseite des hochstehenden Randes (7) verrastet ist.

## Claims

1. A toothbrush (1) with a handle (2) and an exchangeable brush head (3), the bristles (4) of which, disposed on a bristle plate (5) releasably connected to the handle (2), stick out approximately at a right angle, this bristle plate (5) fitting into a recess (8) in the handle (2) or a widening (9) of the handle (2) which has a base (6) and an oppositely-located standing edge (7) and the bristle plate having a pressing-out projection (11) which engages in a penetrating hole (10) in the base (6), wherein the standing edge (7) of the recess (8) lies against the narrow side (12) of the bristle plate (5) and extends around its circumference in such a way that a reception area is formed for the bristle plate (5) and the pressing-out projection (11), characterised in that a material component of a different material from the material of the handle (2) and/or the bristle plate (5) is inserted, incorporated or injected by means of the two-component injection moulding process into the reception area and/or on the bristle plate (5) in the opposite contact surfaces or lines of contact, this material being softer than the material of the standing edge (7), the recess (8) and/or the bristle plate (5) and its pressing-out projection (11) and is configured so that a seal is attained between the bristle plate (5) and the recess (8) of the handle (2) when the toothbrush is in its position of use.

2. A toothbrush according to claim 1, characterised in that the portion of the reception area which comprises softer material is elastically deformed by the bristle plate (5) and/or its pressing-out projection when the toothbrush is in its position of use and/or soft material disposed on the bristle plate (5) is compressed by the edge (7) of the recess.

3. A toothbrush according to claim 1 or 2, characterised in that the injected softer material component is disposed as a seal on the circumferential edge (7) which protrudes as a wall and/or on the base of the recess and extends especially around the entire circumference of the recess without a break.

4. A toothbrush according to one of claims 1 to 3, characterised in that the softer material component which serves as a seal is configured as a sealing strip (13) which, especially with the face side (7a), is flush with or projects beyond the wall which receives it and/or the side of the bristle plate (5) on which the bristles (4) stand.

5. A toothbrush according to one of claims 1 to 4, characterised in that the sealing strip (13) of the softer material component, disposed on the inside of the standing edge (7), has a sealing lip (13a) projecting inwards towards the centre of the recess (8) which overlaps the edge (12) of the bristle plate (5) in a sealing manner when the toothbrush is in its position of use.

6. A toothbrush according to one of claims 1 to 5, characterised in that the sealing strip (13), which is especially flush with the face side (7a) of the standing edge (7), has a slope, rounded portion or similar insertion aid falling from the outside towards the interior of the recess (8), this insertion aid especially extending up to the inner circulating edge of the sealing lip (13a).

7. A toothbrush according to one of claims 1 to 6, characterised in that a ring (16) of softer material is disposed in at least a partial area of the hole (10) through the base of the recess which accepts the pressing-out projection (11) when the toothbrush is in its position of use.

8. A toothbrush according to claim 7, characterised in that the hole (10) for the pressing-out projection or eject pin is coated with the softer material component over the greater part of its axial extent or over its total axial extent.

9. A toothbrush according to claim 7 or 8, characterised in that the softer material component has a greater radial thickness compared to its central area in the area of the hole (10) for the pressing-out projection (11) on at least one rim of this hole (10), especially on both rims of this hole, due to a sealing sleeve being injected into the hole (10) which is also disposed form-lockingly in the axial direction with the harder material.

10. A toothbrush according to one of claims 1 to 9, characterised in that the softer material component is a plastic which is chemically compatible with the plastic of the handle (2) or stem and/or the plastic of the bristle plate to such an extent that when the softer material component is injected into the harder plastic, a firm bond occurs between the two materials.

11. A toothbrush according to one of claims 1 to 10, characterised in that circulating bars or strips (13, 14) of the softer material component are injected into the recess, both on the inside of the standing edge (7) and also in the base area, especially protruding with regard to this.

12. A toothbrush according to one of claims 1 to 11, characterised in that the underside (18) of the bristle plate (5) itself has a recess and, in contrast, a circulating edge (16), which overlaps and especially elastically deforms the strip (14) of the softer material component, which extends around the base (6) of the recess (8) and projects with regard to this, when the toothbrush is in its position of use.

13. A toothbrush according to one of the preceding claims, characterised in that the two sealing strips (13, 14) of the softer material component extend around the recess (8) at an approximately equal distance, optionally offset in height in comparison to one another, and are disposed further apart in the area of the hole (10) for the pressing-out projection (11) and with the hole (10), which is coated on its part with the softer material component, being disposed in this area of greater distance.

14. A toothbrush according to one of the preceding claims, characterised in that the bristle plate (5) has a projecting area (15) on its circumferential edge (12) which is pressed into the softer material component of the sealing strip (13), or is engaged with a shoulder (7b) on the inside of the standing edge (7), when the toothbrush is in its position of use.

## Revendications

1. Brosse à dents (1) avec un manche (2) et un champ de soies interchangeable (3) dont les soies (4) dépassent à peu près à angle droit d'une plaque de soies (5) reliée au manche (2) de façon amovible, laquelle plaque (5) s'ajuste dans un évidement (8) du manche (2) présentant un fond (6) et un bord (7) surélevé par rapport au fond, ou dans un élargissement (9) du manche (2), et qui présente une avancée d'éjection (11) ayant prise dans une perforation traversante (10) du fond (6), le bord surélevé (7) de l'évidement (8) étant, en position d'utilisation, adjacent au côté étroit (12) de la plaque de soies (5) et passant sur le périmètre de telle sorte qu'une zone de réception est formée pour la plaque de soies (5) et l'avancée d'éjection (11), **caractérisée en ce que** sur la zone de réception et/ou sur la plaque de soies (5), sur les surfaces de contact ou lignes de contact mutuelles, un autre composant de matériau est inséré, par rapport à la matière du manche (2) et/ou de la plaque de soies (5), qu'il est incorporé ou injecté par un procédé de moulage par injection à deux composants, ce composant étant plus mou que la matière du bord surélevé (7) de l'évidement (8) et/ou de la plaque de soies (5) et de son avancée d'éjection (11) et étant formé de telle sorte que l'on obtient une étanchéité entre la plaque de soies (5) et l'évidement (8) du manche (2) en position d'utilisation.

2. Brosse à dents selon la revendication 1, **caractérisée en ce que** la partie de la zone de réception composée du matériau plus mou est déformée de façon élastique en position d'utilisation par la plaque de soies (5) et/ou son avancée d'éjection (11), et/ou est pressée sur le matériau plus mou se trouvant sur la plaque de soies (5) par le bord (7) de l'évidement.

3. Brosse à dents selon la revendication 1 ou 2, **caractérisée en ce que** le composant de matériau plus mou injecté est placé comme étanchéité sur le bord surélevé (7) périphérique comme paroi et/ou sur le fond de l'évidement, et qu'il passe sans interruption notamment sur toute la périphérie de l'évidement.

4. Brosse à dents selon l'une des revendications 1 à 3, **caractérisée en ce que** le composant de matériau plus mou servant d'étanchéité est formé comme une bande d'étanchéité (13) qui est au même niveau que le côté frontal (7a) de la paroi la logeant et/ou au même niveau que le côté de la plaque de soies (5) sur laquelle les soies (4) dépassent, ou qui les dépasse.

5. Brosse à dents selon l'une des revendications 1 à 4, **caractérisée en ce que** la bande d'étanchéité (13) placée à l'intérieur du bord surélevé (7) et constituée du composant de matériau plus mou, présente une lèvre d'étanchéité (13a) dépassant vers l'intérieur vers le milieu de l'évidement (8), lèvre qui entoure de façon étanche le bord (12) de la plaque de soies (5) en position d'utilisation.

6. Brosse à dents selon l'une des revendications 1 à 5, **caractérisée en ce que** la bande d'étanchéité (13) notamment placée au même niveau que le côté frontal (7a) du bord surélevé (7) présente une inclinaison, un arrondi ou un support d'introduction similaire, incliné de l'extérieur vers l'intérieur de l'évidement (8), et qui s'étend notamment jusqu'au bord périphérique intérieur de la lèvre d'étanchéité (13a).

7. Brosse à dents selon l'une des revendications 1 à 6, **caractérisée en ce qu'**une bague (16) en matériau plus mou est placée au moins dans une partie de la perforation (10), logeant l'avancée d'éjection (11) en position d'utilisation et située à travers le fond de l'évidement.

8. Brosse à dents selon la revendication 7, **caractérisée en ce que** la perforation (10) prévue pour l'avancée d'éjection (11) ou la tige d'éjection est revêtue du composant de matériau plus mou sur la plus grande partie de son étendue axiale ou sur la totalité de son étendue axiale en guise d'étanchéité.

9. Brosse à dents selon la revendication 7 ou 8, **caractérisée en ce que** le composant de matériau plus mou a une épaisseur radiale plus grande par rapport à sa partie centrale dans la partie de la perforation (10) prévue pour l'avancée d'éjection (11) sur au moins un bord de cette perforation (10), notamment sur les deux bords de cette perforation, de telle sorte qu'une douille d'étanchéité est injectée dans la perforation (10), douille qui est aussi placée en sens axial à engagement positif avec le matériau plus dur.

10. Brosse à dents selon l'une des revendications 1 à 9, **caractérisée en ce que** le composant de matériau plus mou est une matière plastique compatible chimiquement avec la matière plastique du manche (2) ou de la poignée et/ou avec la matière plastique de la plaque de soies, de manière que lors de l'injection du composant de matériau plus mou dans la matière plastique plus dure on obtient une liaison solide des deux matériaux.

11. Brosse à dents selon l'une des revendications 1 à 10, **caractérisée en ce que** des baguettes ou des bandes (13, 14) en matériau plus mou sont injectées dans l'évidement, aussi bien sur le côté intérieur du bord surélevé (7) que dans le fond, notamment de manière surélevée par rapport à celui-ci.

12. Brosse à dents selon l'une des revendications 1 à 11, **caractérisée en ce que** le côté inférieur (18) de la plaque de soies (5) a de son côté un évidement et un bord opposé (16) qui entoure de façon étanche la bande (14) constituée du composant de matériau plus mou en position d'utilisation, s'étendant sur le fond de l'évidement (8) et surélevée par rapport à celui-ci, et qui se déforme notamment de façon élastique.

13. Brosse à dents selon l'une des revendications précédentes, **caractérisée en ce que** les deux bandes (13, 14) d'étanchéité constituées du composant de matériau plus mou présentant sur le contour de l'évidement (8) l'une par rapport à l'autre à peu près le même écart, mais sont décalées en hauteur et ont un plus grand écart l'une par rapport à l'autre dans la partie de la perforation (10) de l'avancée d'éjection (11), et que la perforation (10) revêtue du composant de matériau le plus mou est placée dans cette partie du plus grand écart.

14. Brosse à dents selon l'une des revendications précédentes, **caractérisée en ce que** la plaque de soies (5) présente sur son bord périphérique une partie en saillie qui est pressée, en position d'utilisation, dans la bande d'étanchéité (13) en matériau le plus mou ou qui est enclenchée avec un talon 7b du côté intérieur du bord surélevé (7).
